# EUROPÄISCHE PATENTSCHRIFT

(11) **EP 0 846 365 B1**
(45) Veröffentlichungstag und Bekanntmachung des Hinweises auf die Patenterteilung: **13.06.2001**
(21) Anmeldenummer: 96926991.9
(22) Anmeldetag: 26.08.1996
(51) Int. Cl.: H02K 5/128, H02K 7/09

(54) **SPALTROHRMOTOR**
CANNED MOTOR
MOTEUR A GAINE

(30) Priorität: 24.08.1995 CH 242295
(43) Veröffentlichungstag der Anmeldung: 10.06.1998
(73) Patentinhaber: LUST ANTRIEBSTECHNIK GmbH, D-35633 Lahnau (DE)
(72) Erfinder: SCHÖB, Reto, CH-8604 Volketswil (CH)
(74) Vertreter: Sulzer Management AG
(86) Internationale Anmeldenummer: CH9600294
(87) Internationale Veröffentlichungsnummer: WO9708808

(56) Entgegenhaltungen:
- WO-A-88/07842
- DE-A- 4 111 466
- FR-A- 2 681 384
- JP-A- 3 107 615
- PATENT ABSTRACTS OF JAPAN Bd. 18, Nr. 355 (E-1573) 05 Juli 1994 & JP,A,06 090 545 (EBARA CORPORATION) 29 M{rz 1994
- IEEE TRANSACTIONS ON ENERGY CONVERSION, Bd. 9, Nr. 1, 1994, NEW YORK, US, Seiten 61-68, XP000465454 CHIBA ET AL.: "AN ANALYSIS OF BEARINGLESS AC MOTORS"

## Beschreibung

Die Erfindung betrifft einen Spaltrohrmotor gemäss dem Oberbegriff von Anspruch 1.

Beim Pumpen von zum Beispiel aggressiven Flüssigkeiten oder von Reinstwasser ist zwischen einem Antriebsmotor und der Pumpe eine vollständige Trennung erforderlich. Es ist bekannt für solche Anwendungen einen Spaltrohrmotor zu verwenden, welcher ein zwischen dem Stator und dem Rotor angeordnetes Spaltrohr aufweist. Es ist bekannt den Rotor eines Spaltrohrmotors hydrostatisch oder mittels eines Gleitlagers zu halten. Ein Spaltrohrmotor aufweisend ein Gleitlager weist zum Beispiel den Nachteil auf, dass in der Flüssigkeit enthaltene abrasive Stoffe das Gleitlager bereits nach kurzer Betriebsdauer zerstören können. Zudem kann die Flüssigkeit durch Partikel des Gleitlagers verunreinigt werden. Ein Spaltrohrmotor aufweistend ein hydrostatisches Lager weist zum Beispiel schlechte Trockenlaufeigenschaften auf. Zudem sind Flüssigkeiten mit gasenden Stoffen, d.h. Flüssigkeit mit Gasanteilen, nur schlecht förderbar.

Aus der JP-A-06 090545 ist ein Spaltrohrmotor bekannt, der die Merkmale des Oberbegriffs des Anspruchs 1 aufweist.

Die WO-A-88/07842 offenbart eine implantierbare Axialfluss-Blutpumpe mit einem magnetisch gelagerten Rotor zum Pumpen des Bluts, wobei zwei Statoren vorgesehen sind, die sowohl den Rotor magnetisch lagern als auch dessen Rotation antreiben.

Aus der JP-A-3 107 615 ist eine magnetische Lagervorrichtung für einen Rotor bekannt, wobei mit der Lagervorrichtung zusätzlich ein Antriebsdrehmoment erzeugt werden kann.

Es ist Aufgabe der vorliegenden Erfindung einen wirtschaftlich vorteilhafteren Spaltrohrmotor vorzuschlagen.

Diese Aufgabe wird gelöst mit einem Spaltrohrmotor gemäss den Merkmalen von Anspruch 1. Die Unteransprüche 2 bis 9 beziehen sich auf weitere, vorteilhafte Ausgestaltungen der Erfindung.

Diese Aufgabe wird insbesondere dadurch gelöst, dass der Spaltrohrmotor einen Rotor, einen Stator sowie ein zwischen dem Rotor und dem Stator angeordnetes Spaltrohr umfasst, und dass zumindest zwei Lagervorrichtungen in einer bezüglich dem Rotor axialen Richtung beabstandet angeordnet sind, und dass zumindest eine der Lagervorrichtungen als eine Lagerantriebsvorrichtung ausgebildet ist und sowohl eine elektromotorische Antriebsvorrichtung als auch eine magnetische Lagervorrichtung umfasst, um den Rotor durch diese Lagerantriebsvorrichtung sowohl anzutreiben als auch in radialer Richtung berührungslos zu lagern. Ferner ist eine aktiv magnetisierbare Spule zum Beeinflussen der axialen Lage des Rotors derart angeordnet, dass das Spaltrohr zwischen dem Rotor und der Spule verläuft.

In einer vorteilhaften Ausführungsform des Spaltrohrmotors ist dieser mit einer Fördervorrichtung für ein Fluid, insbesondere einer Kreiselpumpe verbunden. In einer weiteren vorteilhaften Ausführungsform ist der Rotor des Spaltrohrmotors von zumindest zwei in axialer Richtung beabstandet angeordneten magnetischen Lagervorrichtungen in radialer Richtung berührungslos magnetisch gelagert. In einer weiteren vorteilhaften Ausführungsform ist die eine magnetische Lagervorrichtung des Spaltrohrmotors als eine Lagerantriebsvorrichtung umfassend eine elektromotorische Antriebsvorrichtung sowie eine magnetische Lgervorrichtung ausgestaltet. In einer besonders vorteilhaften Ausführungsform ist die Lagerantriebsvorrichtung des Spaltrohrmotors als ein lagerloser Motor ausgebildet, mit einer im Stator angeordneten Motorwicklung sowie einer im Stator angeordneten Steuerwicklung, wobei die Motorwicklung eine Polpaarzahl p und die Steuerwicklung eine Polpaarzahl p±1 aufweist.

Ein Vorteil des erfindungsgemässen Spaltrohrmotors ist darin zu sehen, dass der Rotor mit rein passiv wirkenden Komponenten ausgestaltbar ist, und dass die den Rotor magnetisch lagernden oder magnetisch antreibenden Spulen durch ein Spaltrohr vom Rotor getrennt angeordnet sind. Somit ist der Rotor berührungsfrei magnetisch gelagert und der den Rotor umgebende Raum ist gegenüber dem Stator durch das Spaltrohr hermetisch getrennt. Dadurch ist eine Spaltrohrpumpe herstellbar, deren Rotor berührungsfrei gelagert ist und deren den Rotor umgebender Raum durch das Spaltrohr hermetisch vom Stator getrennt ist. Durch diese hermetische Trennung eignet sich die erfindungsgemässe Spaltrohrpumpe zum Beispiel zur Förderung hochreiner Substanzen wie Wasser oder Enzymen biochemischer Prozesse. Auch Chemikalien enthaltend abrasive Stoffe lassen sich mit der erfindungsgemässen Staltrohrpumpe fördern, da der Rotor berührungslos gelagert ist, und die abrasiven Stoffe daher die Lagervorrichtung nicht beschädigen können. Die erfindungsgemässe Spaltrohrpumpe weist hervorragende Trocklaufeigenschaften auf, da der Rotor auch bei Abwesenheit eines Fluides oder bei stark gasenden Fluiden berührungslos magnetisch gelagert ist.

Die Erfindung wird anhand von mehreren Ausführungsbeispielen beschrieben. Es zeigen:
- Fig. 2: einen Längsschnitt durch ein Ausführungsbeispiel eines Spaltrohrmotors mit einer Kreiselpumpe;
- Fig. 3: einen Längschnitt durch ein Ausführungsbeispiel mit symmetrisch angeordneten Spaltrohrmotoren und einer dazwischenliegenden Kreiselpumpe; (nicht fegenstand der Erfindung)

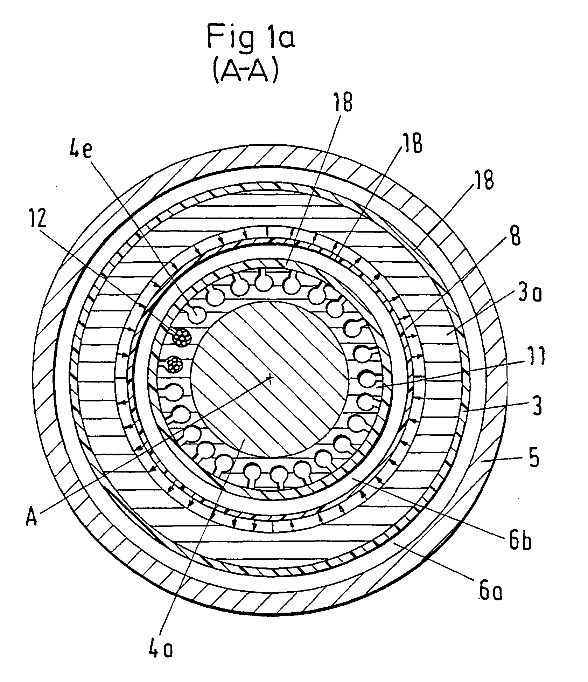

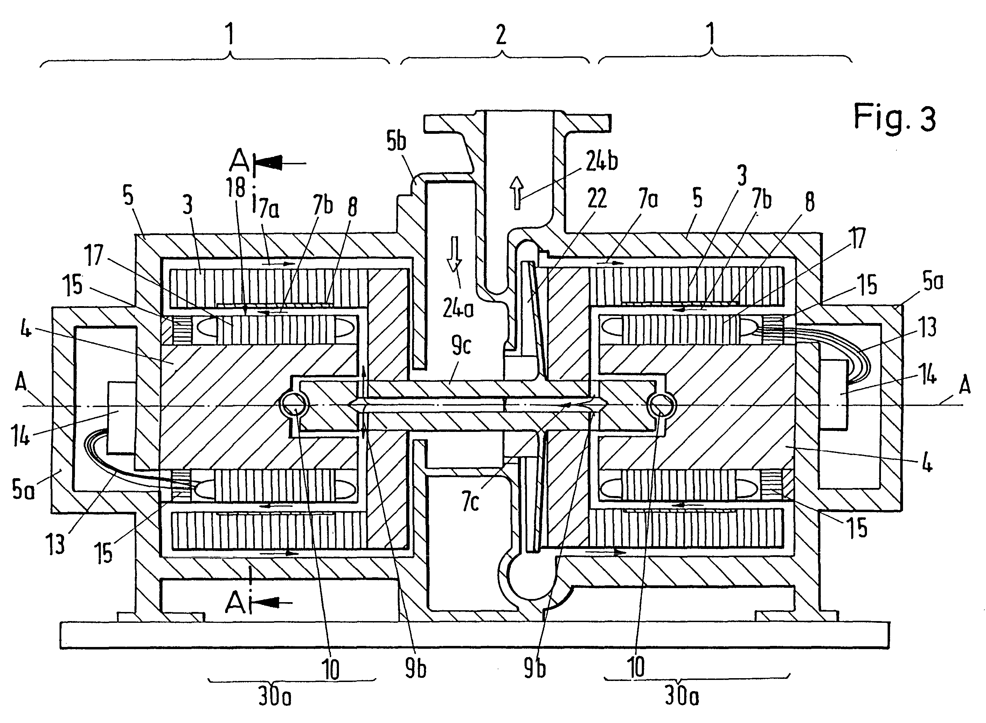

- Fig. 1a: einen Querschnitt durch Fig. 3 entlang der Linie A-A;

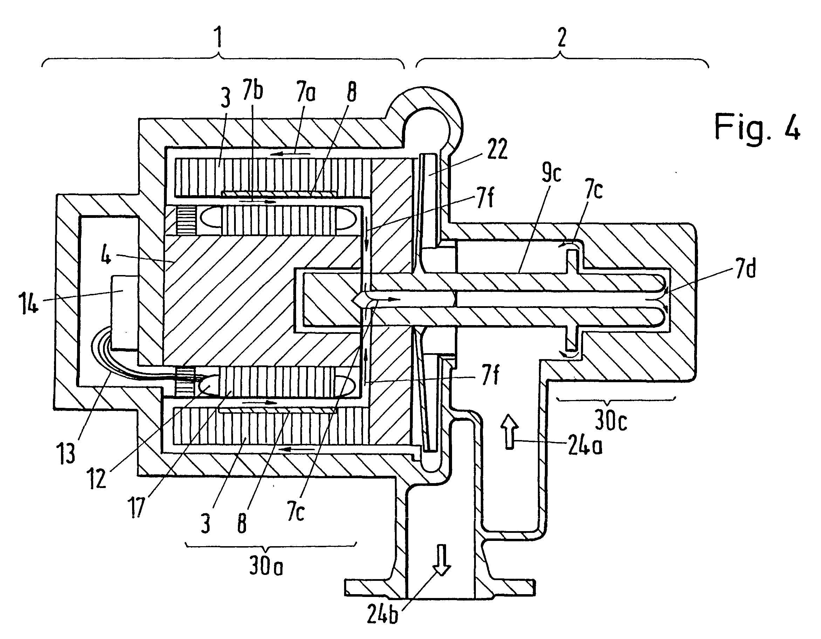

- Fig. 4,5,6,7: einen Längsschnitt durch ein weiteres Ausführungsbeispiel eines Spaltrohrmotors mit einer Kreiselpumpe; (Fig. 4 nicht fegenstand der Erfindung)

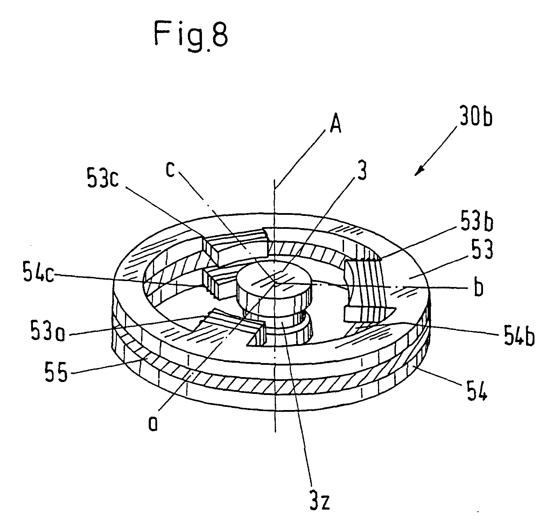

- Fig. 8: ein Ausführungsbeispiel eines als Unipolarlager ausgestalteten, magnetischen Radiallagers;

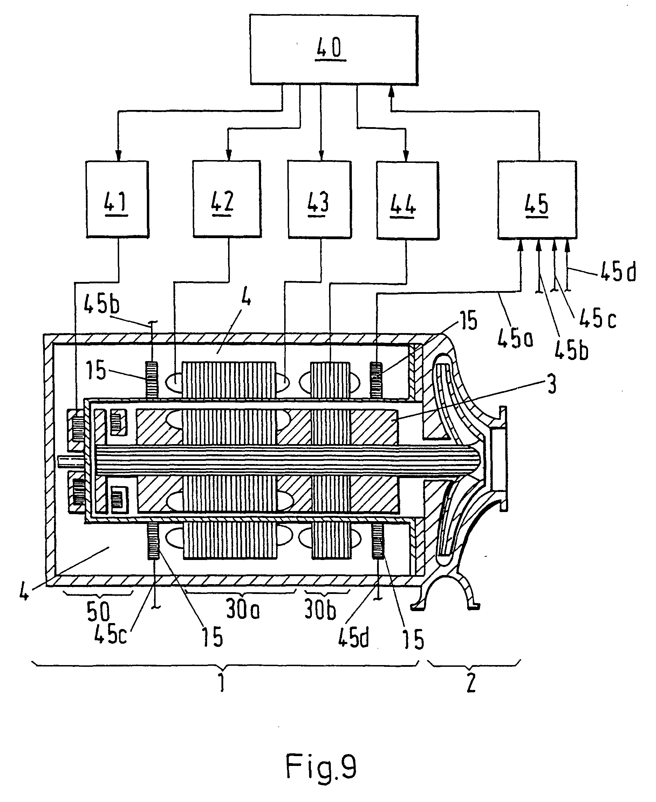

- Fig. 9: ein Spaltrohrmotor mit einer Ansteuervorrichtung.

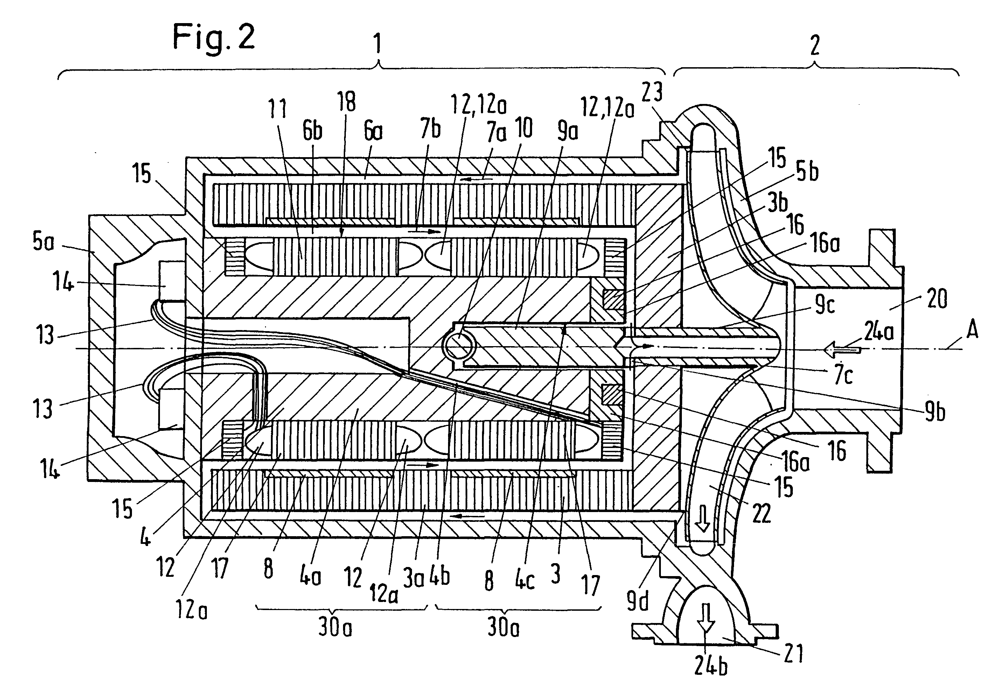

Fig. 2 zeigt einen mit einem Aussenläufer 3 ausgestalteten Spaltrohrmotor 1, welcher über eine Welle 9c mit einer Kreiselpumpe 2 verbunden ist. Die Kreiselpumpe 2 saugt über die Einlassöffung 20 ein in Richtung 24a strömendes Fluid an, und fördert dieses mittels eines rotierenden Laufrades 22 in Richtung 24b strömend zum Auslass 21. Der Spaltrohrmotor 1 sowie die Kreiselpumpe 2 weisen eine gemeinsame Drehachse A auf. Der Stator 4 des Spaltrohrmotors 1 ist innenliegend angeordnet und weist einen Kern 4a aus magnetisch leitendem Material, insbesondere Eisen, auf, an dessen Oberfläche in radialer Richtung verlaufende Eisenbleche 11 angeordnet sind, in welche elektrische Leiter 12 eingelegt sind, in der bei Elektromotoren üblichen Art. Alle Eisenbleche 11 zusammen bilden ein Statorblechpaket. Die elektrischen Leiter 12 sind derart angeordnet, dass ein elektromagnetisches Drehfeld erzeugbar ist, um den aussenliegenden Rotor 3 in eine Rotation zu versetzen. Der Stator 4 weist eine zylinderförmige Ausnehmung 4c zur Aufnahme eines Spurlagers 10 auf. Die Kreiselpumpe 2 erzeugt während dem Förderbetrieb eine in Flussrichtung 24a wirkende Kraft, welche über die Welle 9c,9a und das Spurlager 10 auf den Stator 4 übertragen wird. Der Stator 4 ist von einem als Aussenläufer ausgestalteten, hohlzylinderförmigen Rotor 3 umgeben, welcher auf der dem Stator 4 zugewandten, axial verlaufenden Innenfläche angeordnete Permanentmagnete 8 aufweist. Der Rotor 3 kann auch derart ausgestaltet sein, dass sich zusammen mit dem Stator 4 ein Induktionsmotor oder ein Reluktanzmotor ergibt. Der hohlzylinderförmige Rotor 3 weist an dem der Kreiselpumpe 2 zugewandten Ende ein scheibenförmiges Abschlussteil 3b auf, welches mit der Welle 9c verbunden ist, um das Laufrad 22 anzutreiben. Der Rotor 3 kann zudem eine hohlzylinderförmige Verbindung 9d aufweisen, welche das scheibenförmige Abschlussteil 3b mit der Kreiselpumpe 2 verbindet, wobei das Verbindungsteil 9d im gemäss Fig. 2 dargestellten Ausführungsbeispiel einen Durchmesser entsprechend dem Aussendurchmesser des Rotors 3 aufweist.

Der Spaltrohrmotor 1 sowie die Kreiselpumpe 2 sind von einem gemeinsamen, druckfesten Gehäuse 5 umgeben. Der Spaltrohrmotor 1 weist ein Spaltrohr 18 auf, indem zumindest die dem Rotor 3 zugewandte Oberfläche des Stators 4 beziehungsweise der Lamellen 11 mit einem fluid- oder flüssigkeitsundurchlässigen Mittel 18 bzw. mit einem Spaltrohr 18 umschlossen sind. Dieses Spaltrohr 18 kann insbesondere aus einem Metall, einer Metalllegierung wie Hastelloy C22 oder einem Kunststoff bestehen, insbesondere aus einem korrosionsbeständigen Material. Die derart ausgebildete Spaltrohrmotorpumpe 1,2 weist eine Öffnung 23 für einen Flüssigkeitsdurchtritt auf, sodass die Flüssigkeit ausgehend vom Hochdruckteil der Pumpe 2 vorerst in axialer Richtung 7a zwischen dem Rotor 3 und der Gehäuse 5 fliesst, danach in entgegengesetzter, axialer Richtung 7b zwischen dem Rotor 3 und dem Stator 4 zurückfliesst, und dabei für den Rotor 3 ein hydrodynamisches Radiallager ausbildet. Die Flüssigkeit strömt weiter, in einer zur Drehachse A radialen Richtung verlaufend zwischen dem Stator 4 und der Scheibe 3b gegen die Drehachse A hin, wobei sich zwischen der Stirnflächen des Stators 4 und der gegenüberliegenden Fläche der Scheibe 3b ein hydrodynamisches Axiallager für den Rotor 3 ausbildet. Die Flüssigkeit strömt über eine Öffnung 9b in die Welle 9c hinein, und weiter durch die hohle Welle 9c hindurch zum Einlass 20 der Kreiselpumpe 2 hin. Die Welle 9c weist ein Verlängerungsteil 9a auf, welches in der zylinderförmigen Ausnehmung 4c des Stators 4 mit einem Spurlager 10 gelagert ist. Das Spurlager 10 wird insbesondere zum Anlauf der Kreiselpumpe 2 benötigt, wogegen während dem Förderbetrieb das zwischen dem Stator 4 und der Scheibe 3b ausgebildete hydrodynamische Axiallager genügt, um die in axialer Richtung wirkenden Kräfte zu kompensieren.

Das scheibenförmige Abschlussteil 3b kann auch ohne Durchbrechung 9b mit der Welle 9a,9c verbunden sein. Dadurch werden die Spalten 6a,6b mit Flüssigkeit gefüllt, es tritt in axialer Richtung A jedoch eine Flussrichtung 7a, 7b auf. Somit weist der Rotor 3 eine insbesondere in radialer Richtung wirkende hydrodynamische Lagerung auf.

Der Rotor 3 kann wie dargestellt mit Permanentmagneten 8 bestückt sein, oder als ein Käfigläufer oder ein Reluktanzläufer ausgebildet sein.

Ein Stator 4 kann Hohlräume aufweisen, wie zum Beispiel bei den elektrischen Leitern 12, im Endbereich des Stators 4. Derartige Hohlräume lassen sich mit einem Füllmaterial wie einem Giessharz oder mit einem Öl füllen, sodass die flüssigheitsundurchlässige Schicht auch auf dem Füllmaterial aufliegt.

Ein Vorteil des erfindungsgemässen Spaltrohrmotors 1 ist darin zu sehen, dass die flüssigkeitsundurchlässige Schicht 18 auf der Oberfläche des zylinderförmig ausgestalteten Stators 4 angeordnet ist. Da diese Schicht 18 ausschliesslich einer Druckbelastung ausgesetzt ist, kann diese Schicht 18 sehr dünn ausgestaltet sein und/oder aus einem elastischen Material wie einem Kunststoff bestehen. Ein weiterer Vorteil des Spaltrohrmotors 1 ist darin zu sehen, dass die im Spalt 6a,6b,6c fliessende Flüssigkeit einen sehr hohen Druck aufweisen kann, ohne die flüssigkeitsundurchlässige Schicht 18 zu beschädigen. Ein weiterer Vorteil des Spaltrohrmotors 1 ist darin zu sehen, dass der Kern 4a des Stators 4 auch aus einer Keramik herstellbar ist, sodass der Stator 4 eine hohe Druckfestigkeit aufweist sowie das Spurlager 10 vorteilhafte Lagereigenschaften aufweist.

Der Spaltrohrmotor 1 weist zwei in Richtung der Achse A beabstandet angeordnete Lagervorrichtungen 30a auf, welche beide als ein sogenannter lagerloser Motor ausgebildet sind. Ein derartiger lagerloser Motor erzeugt ein Drehmoment in Antriebsrichtung auf den Rotor 3 sowie eine Kraft in radialer Richtung auf den Rotor 3, um den Rotor 3 kontaktlos zu lagern. Der Stator 4 eines derartigen lagerlosen Motors weist eine Wicklung 12 mit einer Polpaarzahl p auf zur Erzeugung des Drehmomentes sowie eine zusätzliche Steuerwicklung 12a zum berührungslosen Lagern des Rotors 3, wobei die Steuerwicklung 12a eine Polpaarzahl von p ± 1 aufweist. Im Stator 4 sind weiter Sensoren 15 mit integriertem Positionssensor angeordnet, um die Lage des Rotors 3 relativ zum Stator 4 zu erfassen und einer Regelvorrichtung 40 weiterzuleiten. Der Stator 4 weist Kanäle 4b auf zur Aufnahme elektrischer Leiter 13, welche ausgehend von einer Verteilvorrichtung 14 den Wicklungen 12,12a sowie den Sensoren 15 zugeführt werden. Die Signale der Sensoren 15 werden von einer Messvorrichtung 45 erfasst und einer Regelvorrichtung 40 zugeführt, welche über eine Stellvorrichtung 41,42,43,44 und der nachgeschalteten Verteilvorrichtungen 14 die Wicklungen 12 sowie die Steuerwicklungen 12,12a entsprechend ansteuert.
Eine Steuerelektronik 40 erfasst die Werte der Sensoren 15, und steuert die Steuerwicklungen 12,12a derart an, dass die Lage des Rotors 3 in radialer und/oder in axialer Richtung geregelt wird, derart, dass der Rotor 3 sowie die damit verbundene Kreiselpumpe 2 mit Rad 22 berührungslos magnetisch gelagert ist und frei drehen können. Diese Art der Magnetlagerung ist zum Beispiel beim Anlaufen und Auslaufen der Kreiselpumpe 2 vorteilhaft, weil in diesen Betriebszuständen die Flüssigkeit einen relativ kleinen Druck aufweist, sodass durch die im Spaltrohr 6a,6b fliessende Flüssigkeit 7a,7b nicht gewährleistet ist, dass sich der Rotor 3 und der Stator 4 nicht gegenseitig berühren. Das aktiv geregelte Magnetlager verhindert insbesondere bei Stillstand des Motors ein gegenseitiges berühren von Rotor 3 und Stator 4, wobei bei grösseren auftretenden Kräften ein Notlauflager 10 bzw. ein Spurlager 10 vorgesehen ist, um die einwirkenden Kräfte auf den Stator 4 zu übertragen. Es kann sich als vorteilhaft erweisen am Stator 4 ein aktives Axialmagnetlager anzuordnen. Fig. 2 zeigt an der Stirnfläche des zylinderförmigen Stators 4 ein ringförmig ausgestaltetes aktives Magnet mit einer Ringwicklung 16, angeordnet in einem magnetisch gut leitfähigen Abschlussteil 16a. Dieses aktive Magnet mit Ringwicklung 16 erlaubt den Rotor 3 gegen den Stator 4 hin zu ziehen. Dabei erzeugt die sich zwischen dem scheibenförmigen Abschlussteil 16a des Stators 4 und dem scheibenförmigen Abschluss 3b des Rotors 3 befindliche Flüssigkeit ein hydrodynamisches Lager mit einer zur Kreiselpumpe 22 hin wirkenden Kraft. Das aktive Magnet mit Ringwicklung 16 bewirkt eine zu dieser entgegengesetzten Kraft. Der Abstand zwischen den beiden Abschlussteilen 3b, 16a wird von einem Sensor 15 überwacht. Dieses Sensorsignal wird einer Regelvorrichtung 40 zugeführt, welche das aktive Magnet mit Ringwicklung 16 entsprechend den Vorgabewerten ansteuert.

Fig. 1a zeigt einen Querschnitt durch Fig. 3 entlang der Linie A-A. Der Rotor 4 weist eine Mehrzahl von parallel zur Achse A verlaufenden Ausnehmungen 4e beziehungsweise Nuten 4e auf. Im Querschnitt gemäss Fig. la sind zur Vereinfachung der Darstellung nur in wenigen Nuten 4e die eingelegten elektrischen Leiter 12 dargestellt. Es weisen jedoch bei zusammengesetztem Motor alle Nuten 4e einen eingelegten elektrischen Leiter 12 auf. Die Leiter 12 können derart angeordnet und ansteuerbar sein, dass sie mit einem Drehstrom betreibbar sind und dabei im Stator 4 ein sich drehendes Magnetfeld entsteht. Die in Fig. 3 nicht dargestellt, dünne fluid- oder flüssigkeitsundurchlässige Schicht 18, das Spaltrohr 18, ist aus Fig. 1a ersichtlicht. Der Rotor 3 weist von aussen nach innen hin zuerst eine fluid- oder flüssigkeitsundurchlässige Schicht 18 auf, gefolgt von einem Rotorblechpaket 3a, einer Schicht von in radialer Richtung polarisierten Permanentmagneten 8 und einer abschliessend auf den Permanentmagnenten 8 aufliegenden, fluid- oder flüssigkeitsundurchlässigen Schicht 18. Bei den Permanentmagneten 8 sind mit Pfeilen die Richtung der Magnetisierung dargestellt, wobei die Magnetisierung in radialer Richtung verläuft, und wobei einzelne Permanentmagnete 8 in Umfangsrichtung derart nebeneinander angeordnet sind, dass Bereiche mit radial nach Äussen und Bereiche mit radial nach Innen weisender Magnetisierung entstehen. Das Statorblechpaket 11 sowie die Nuten 4e sind gegen den Spalt 6b hin mit einer fluid- oder flüssigkeitsundurchlässigen Schicht 18 überzogen, sodass der gesamte Stator vor einer im Spalt 6b befindlichen Flüssigkeit geschützt ist.

Fig. 3 (nicht fegenstand der Erfindung) zeigt einen Längsschnitt eines Spaltrohrmotors 1 mit zwei symmetrisch angeordneten Statoren 4 sowie zwei. über eine gemeinsame Welle 9c verbundene Rotoren 3. Die Kreiselpumpe 2 ist an der gemeinsamen Welle 9c befestigt. Die Kreiselpumpe 2 sowie die Spaltrohrmotoren 1 sind gemeinsam in einem druckfesten Gehäuse 5, 5a, 5b angeordnet. An der Oberfläche des Stators 4 ist wiederum eine flüssigkeitsundurchlässige Schicht 18 angeordnet. Der Spaltstrom fliesst ausgehend von der Druckseite 24b in axialer Richtung 7a verlaufend zwischen dem Gehäuse 5 und dem Rotor 3, weiter in entgegengesetzter Richtung 7b fliessend zwischen dem Rotor 3 und dem Stator 4, und mündet über eine Öffnung 9b in die Welle 9c, durchfliesst die Welle 9c in deren Zentrum in axialer Richtung verlaufend, tritt beim links angeordneten Motor 1 über die Öffnung 9b zwischen dem Rotor 3 und dem Stator 4 fliessend wieder aus, und fliesst anschliessend zwischen dem Gehäuse 5 und dem Rotor 3 zur Saugseite 24a der Kreiselpumpe 2 hin. Dadurch wird eine hydrodynamische Lagerung erzielt. Im Ausführungsbeispiel gemäss Fig. 3 sind die beiden Elektromotoren 1 als lagerlose Motoren, wie in Fig. 2 beschrieben, aufgeführt.
Ein Vorteil der Ausführung gemäss Fig. 3 ist darin zu sehen, dass die symmetrische Anordnung der Motoren 1 kleinere Lagerkräfte bewirkt, dass der Hebelarm zwischen der Kreiselpumpe 2 und dem Motor 1 kürzer Ausfällt, und dass es dadurch möglich ist, auf einfache Weise eine mehrere Druckstufen aufweisende Pumpe zwischen den Motoren 1 angeordnet zu betreiben.

Fig. 4 (nicht fegenstand der Erfindung) zeigt ein weiteres Ausführungsbeispiel einer durch einen Spaltrohrmotor 1 angetriebenen Kreiselpumpe 2. Dieser Spaltrohr 1 weist wiederum einen innenliegenden Stator 4 sowie einem aussenliegenden Rotor 3 auf. Der Spaltrohrmotor 1 weist wiederum ein durch die Fluidströme 7a, 7b ausgebildetes Radiallager sowie ein durch die in radialer Richtung fliessenden Fluidstörme 7f bewirktes hydrodynamisches Axiallager auf, wobei das Fluid in einer im Zentrum der Welle 9c angeordneten Ausnehmung in axialer Richtung nach rechts in eine hydraulische Lagervorrichtung 30c strömt. Das Fluid strömt in Richtung 7d und 7e zur Saugseite 24a der Kreiselpumpe 2 zurück. Die auf der rechten Seite angeordnete hydraulische Lagervorrichtung 30c bewirkt ebenfalls eine Lagerung der Welle 9c in radialer und axialer Richtung. Im Ausführungsbeispiel gemäss Fig. 4 ist die Lagerantriebsvorrichtung 30a wiederum als ein lagerloser Motor ausgeführt.

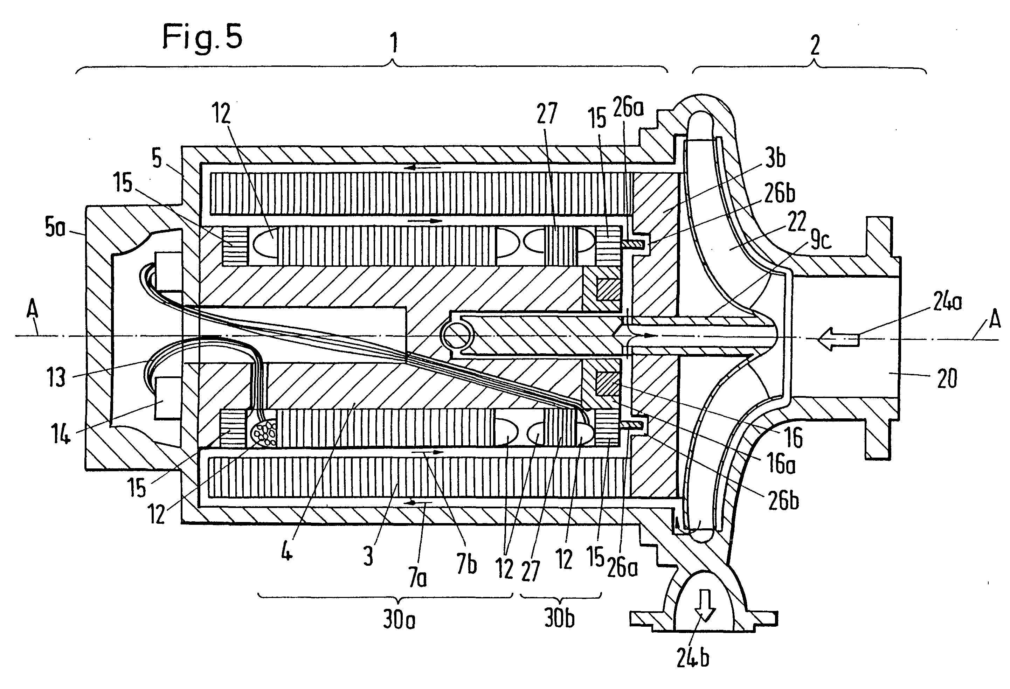

Fig. 5 zeigt ein weiteres Ausführungsbeispiel eines Spaltrohrmotors 1, welcher einen aussenliegenden Rotor 3 aufweist. Der Stator 4 weist auf der linken Seite eine Lagerantriebsvorrichtung 30a, ausgestaltet als ein lagerloser Motor auf, und auf der rechten Seite eine Lagervorrichtung 30b, ausgestaltet als ein aktiv geregeltes Radialmagnetlager 27. Zudem weist der Stator ein aktiv geregeltes Axialmagnetlager 16, 16a auf. Die Sensoren 15 überwachen die Lage des Rotors 3 relativ zum Stator 4. Der scheibenförmige Abschluss 3b des Rotors 3 weist eine ringförmige Ausnehmung 26b auf. Der Stator 4 weist dieser Ausnehmung 26b gegenüberliegend angeordnet ein ringförmig vorstehendes Teil 26a auf. Die beiden Komponenten 26a, 26b bilden zusammen ein passives Mittel 26a, 26b zur Regelung des hydrodynamischen Lagers. Die passiven Mittel 26a, 26b dienen zum Ausgleich der Lage des Rotors 3 bezüglich dem Stator 4 in axialer Richtung.

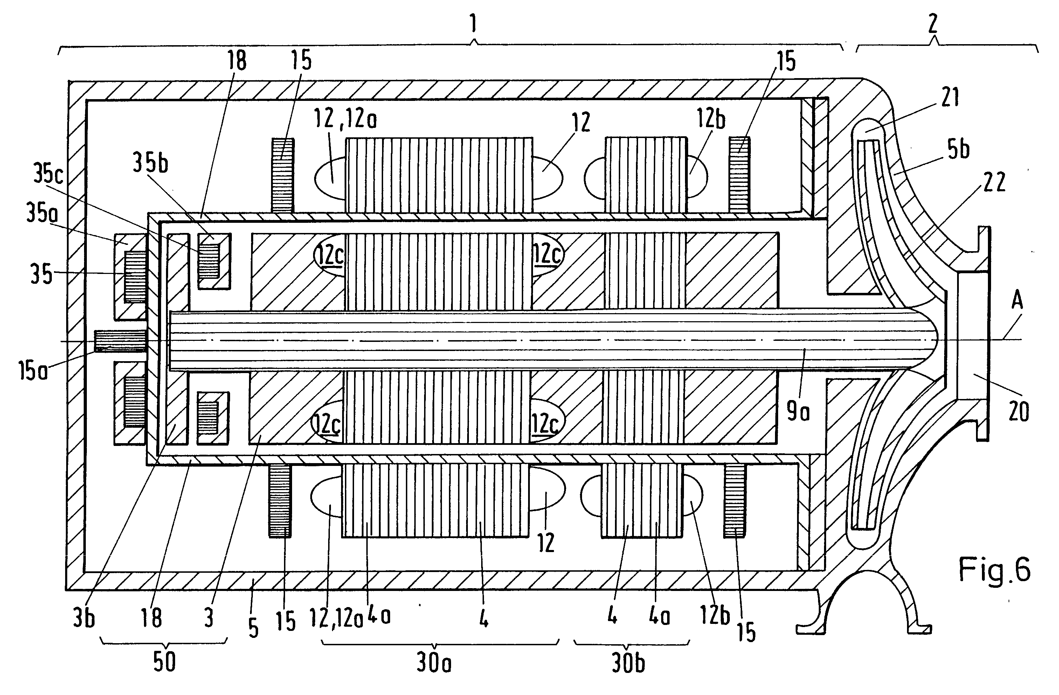

Fig. 6 zeigt ein weiteres Ausführungsbeispiel eines Spaltrohrmotors 1 mit einem innenliegenden Rotor 3, welcher von einem Spaltrohr 18 und einem aussenliegenden Stator 4,4a umgeben ist. Der Spaltrohrmotor 1 weist zwei in axialer Richtung beabstandet angeordnete Lagervorrichtungen 30a, 30b auf, die den Rotor 3 durch magnetisch wirkende Mittel in radialer Richtung berührungsfrei im Stator 4,4a halten. Die eine Lagervorrichtung 30a ist als ein lagerloser Motor ausgebildet, deren Stator 4a eine Motorwicklung 12 mit einer Polpaarzahl p sowie eine Steuerwicklung 12a mit einer Polpaarzahl p ± 1 aufweist. Im Rotor 3 des lagerlosen Motors 30a sind in axialer Richtung verlaufende Wicklungen 12c angeordnet, in welchen durch das von der Motorwicklung 12 und der Steuerwicklung 12a erzeugte magnetische Drehfeld ein elektrischer Strom induziert wird. Die Wicklung 12c ist als eine Kurzschlusswicklung ausgestaltet. Die andere Lagervorrichtung 30b ist als ein Magnetlager ausgebildet mit einer Steuerwicklung 12b. Eine derartige Steuerwicklung 12b umfasst üblicherweise drei oder vier getrennt ansteuerbare Wicklungen, um den Rotor 3 berührungsfrei zu lagern. Dieses Magnetlager 30b wird vorteilhafterweise möglichst nahe am Flügelrad 22 angeordnet, um die Länge des zwischen dem Magnetlager 30b und dem Flügelrad 22 verlaufenden Teils der Welle 9a möglichst kurz zu halten, sodass dieser Teil der Welle 9a bezüglich der vom Flügelrad 22 in radialer Richtung bewirkten Kräfte einen nur kurzen Hebelarm ausbildet. Der Abstand zwischen dem Stator 4 und dem Rotor 3 beträgt in radialer Richtung lmm, wobei das Spaltrohr 1 eine Dicke von 0.6 mm und der Luftspalt einen Abstand von 0.4 mm aufweist. Die Lage des Rotors 15 wird mit Sensoren 15 überwacht, wobei diese Sensoren 15 durch das Spaltrohr 1 vom Rotor 3 getrennt angeordnet sind. Als Messprinzip eignet sich ein Wirbelstromsensor, ein induktiver Sensor oder ein Hallelement mit Permanentmagnet. Am linken Ende des Rotors 3 ist eine axiale magnetische Lagervorrichtung 50 angeordnet. Der eine Teil der Lagervorrichtung 50 ist innerhalb des Spaltrohrs 1 angeordnet und umfasst einen u-förmig ausgestalteten, in Umfangrichtung des Rotor 3 kreisförmig verlaufenden magnetisch leitenden Körper 35b sowie einen entsprechend im Körper 35b angeordneten Permanentmagnet 35c, um eine permanetmagnetische, in axialer Richtung wirkende Kraft auf die Scheibe 3b der Welle 9a zu bewirken. Ausserhalb des Spaltrohrs 1 ist der weitere Teil der Lagervorrichtung 50 angeordnet, welcher einen u-förmig ausgestalteten, kreisförmig verlaufenden magnetisch leitenden Körper 35a umfasst mit einer in der u-förmigen Ausnehmung angeordneten, ansteuerbaren elektrischen Spule 35. Diese Spule 35 ist durch eine Ansteuervorrichtung 41 ansteuerbar, sodass die axiale Lage des Rotors 3, welche mit einem Sensor 15a überwacht wird, kontrolliert beeinflussbar ist.

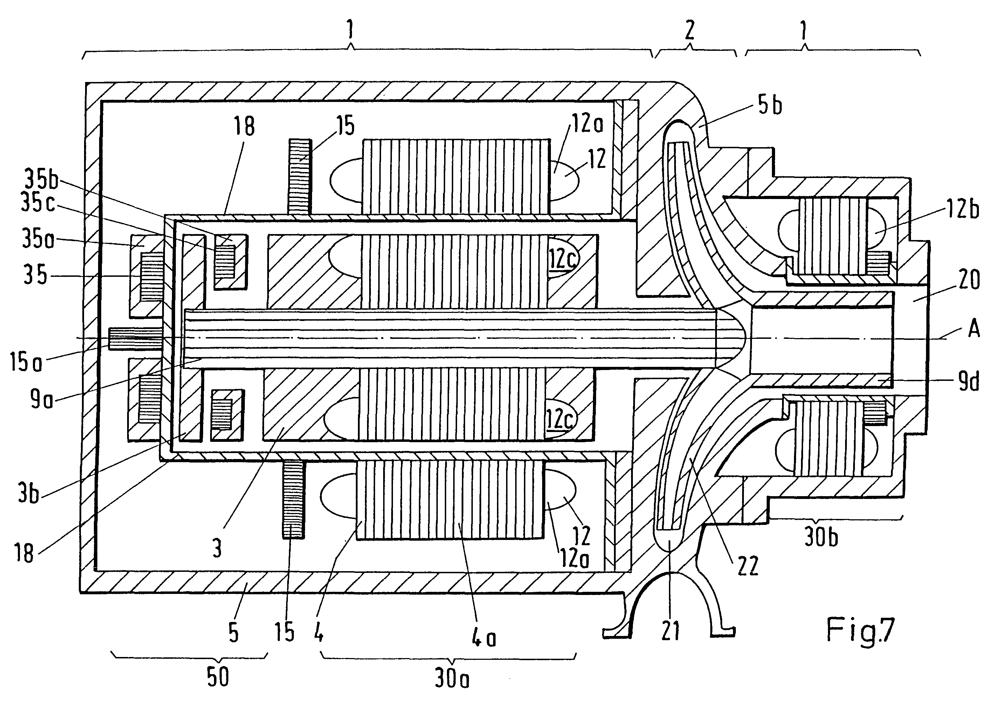

Fig. 7 zeigt eine zum Ausführungsbeispiel gemäss Fig. 6 ähnliche Anordung, wobei das rotierende Rad 22 der Kreiselpumpe 2 zwischen dem lagerlosen Motor 30a und dem Magnetlager 30b angeordnet ist. Auf der Seite des Einlasses 20 weist das rotierende Rad 22 einen hohlzylinderförmigen Fortsatz 9d auf, welcher magnetisch leitend ausgestaltet ist und derart mit dem Magnetlager 30b zusammenwirkt, dass dieser Fortsatz 9d durch magnetisch wirkende Kräfte berührungslos in radialer Richtung gehalten ist.

Figur 8 zeigt ein Ausführungsbeispiel einer magnetischen Lagervorrichtung 30b, welche einen Rotor 3 mittels magnetisch wirkender Kräfte berührungslos in radialer Richtung hält. Ein derartig ausgestaltetes Magnetlager 30b wird als ein Unipolarlager bezeichnet und weist zwei Drehfeldmaschinenstatoren 53,54 auf, mit jeweils drei diskret ausgebildeten Spulen 53a,53b,53c; 54a,54b,54c. Zwischen den Drehfeldmaschinenstatoren 53,54 ist ein ringförmig ausgestalteter, in axialer Richtung polarisierter Permanentmagnet 55 angeordnet, welcher einen von dem einen Drehfeldmaschinenstator 53 auf den Rotor 3, und von diesem wieder zurück zum Drehfeldmaschinenstator 54 fliessenden Unipolarfluss erzeugt. Die Spulenpaare 53a,54a; 53b,54b; 53c,54c sind vorzugsweise in Serie geschaltet und werden von einem insbesondere dreiphasigen Drehstromsteller derart angesteuert, dass der Rotor 3 berührungslos im Magnetlager 30b gelagert ist. In einer vorteilhaften Ausführungsform weist der Rotor 3 eine in Umfangsrichtung verlaufende Nut 3z auf. Diese Nut 3z bewirkt eine Stabilisierung des Rotors 3 in axialer Richtung beziehungsweise bei einer Auslenkung des Rotors 3 in axialer Richtung eine zur Auslenkung entgegengesetzte magnetische Kraft. Ein Magnetlager 30b gemäss der in Fig. 8 dargestellten Ausführungsform ist zum Beispiel in einem Spaltrohrmotor 1 gemäss Fig. 6 einsetzbar. Der Rotor 3 bildet einen Teil der Welle 9a. Wenn das Magentlager 30b eine Nut 3z aufweist kann auf den innerhalb des Spaltrohrs 18 angeordneten Teils des Axiallagers 50 verzichtet werden, da durch die in axialer Richtung relative Anordung von Welle 9a und Magnetlager 30b eine in axialer Richtung wirkende Vorspannkraft erzeugbar ist.

Als eine weitere Ausführungsform eines Magnetlagers 30b eignet sich zum Beispiel auch ein Stator mit drei in Umfangsrichtung beabstandet angeordneten u-förmig ausgestalteten Spulenkörpern, welche jeweils eine ansteuerbare Spule aufweisen, um einen Rotor 3 berührungsfrei magnetisch zu lagern.

Fig. 9 zeigt eine Ansteuervorrichtung in Kombination mit einer Spaltrohrpumpe gemäss der in Fig. 6 dargestellten Ausführungsform. Die Lage des Rotors 3 wird mit einer Mehrzahl von Sensoren 15 erfasst und über elektrische Leitungen 45a, 45b, 45c, 45d eine Signalauswertevorrichtung 45 zugeführt, welche die Lage des Rotors einer übergeordneten Kontrollvorrichtung 40 übermittelt. Diese Regelvorrichtung 40, welche üblicherweise einen Computer umfasst, steuert über den Umrichter 41 das axiale Lager 50, über die Umrichter 42 und 43 die beiden Spulen 12 und 12a des lagerlosen Motors 30a und über den Umrichter 44 das Magnetlager 30b. Mit der dargestellten Regelvorrichtung ist die Lage des Rotors 3 in radialer und axialer Richtung ansteuerbar, derart, dass der Rotor 3 berührungslos im Stator 4 gelagert ist. Zudem steuert die Regelvorrichtung 40 über die beiden Spulen 12 und 12a den lagerlosen Motor 30a, womit der Rotor 3 angetrieben wird.

Die Lagerantriebsvorrichtung 32 kann auch derart ausgestaltet sein, dass ein Elektromotor 31 sowie eine magnetische Lagervorrichtung 30b derart kombiniert angeordnet sind, dass sowohl eine den Rotor 3 tragende Wirkung als auch eine den Rotor 3 antreibende Wirkung entsteht. Zum Beispiel kann die magnetische Lagervorrichtung 30b in axialer Richtung unmittelbar neben dem Elektromotor 31 angeordnet sein. Als antreibender Elektromotor 31 eignet sich zum Beispiel ein Synchronmotor oder ein bürstenloser DC-Motor mit Permanentmagneterregung oder mit einer durch Strom erregten Erregerwicklung. Ebenfalls geeignet ist ein Induktionsmotor oder ein Reluktanzmotor.

## Patentansprüche

1. Spaltrohrmotor umfassend einen Rotor(3), einen Stator (4) sowie ein zwischen dem Rotor (3) und dem Stator (4) angeordnetes Spaltrohr (18), und zumindest zwei Lagervorrichtungen (30a,30b,30c), die in einer bezüglich dem Rotor (3) axialen Richtung (A) beabstandet angeordnet sind, dadurch gekennzeichnet, dass zumindest eine der Lagervorrichtungen (30a,30b,30c) als eine Lagerantriebsvorrichtung (32;30a) ausgebildet ist und sowohl eine elektromotorische Antriebsvorrichtung (30a) als auch eine magnetische Lagervorrichtung (30b) umfasst, um den Rotor (3) durch diese Lagerantriebsvorrichtung (32;30a) sowohl anzutreiben als auch in radialer Richtung berührungslos zu lagern, und dass eine aktiv magnetisierbare Spule (35 ; 16) zum Beeinflussen der axialen Lage des Rotors (3) derart angeordnet ist, dass das Spaltrohr (18) zwischem dem Rotor (3) und der Spule (35 ; 16) verläuft.

2. Spaltrohrmotor nach Anspruch 1, dadurch gekennzeichnet, dass die Lagerantriebsvorrichtung (32) einen Elektromotor (30a) sowie eine separat angeordnete, magnetische Lagervorrichtung (30b) umfasst.

3. Spaltrohrmotor nach Anspruch 1, dadurch gekennzeichnet, dass die Lagerantriebsvorrichtung (30a) als ein lagerloser Motor ausgestaltet ist mit einer am Stator (4) angeordneten Motorwicklung (12) mit einer Polpaarzahl p sowie einer Steuerwicklung (12a) mit einer Polpaarzahl p ± 1.

4. Spaltrohrmotor nach einem der Ansprüche 1 bi.s 3, dadurch gekennzeichnet, dass der Rotor (3) als ein Innenläufer oder ein Aussenläufer ausgestaltet ist.

5. Spaltrohrmotor nach einem der Ansprüche 1 bis 4, dadurch gekennzeichnet, dass alle Lagervorrichtungen (30a,30b) als magnetische Lagervorrichtungen ausgestaltet sind, zur berührungslosen Lagerung des Rotors (3) in zumindest radialer Richtung.

6. Spaltrohrmotor nach einem der Ansprüche 1 bi.s 5, dadurch gekennzeichnet, dass zumindest ein Sensor (15) zur Erfassung der Lage des Rotors (3) vorgesehen ist, dass zwischen dem Sensor (15) und dem Rotor (3) ein Spaltrohr (18) angeordnet ist, und dass der Sensor auf einem magnetischen Messprinzip basiert und insbesondere als ein Wirbelstromsensor, ein induktiver Sensor oder ein Hall-Sensor ausgestaltet ist.

7. Spaltrohrmotor nach einem der Ansprüche 1 bis 6, dadurch gekennzeichnet, dass nur genau eine aktiv magnetisierbare Spule (35) zum Beeinflussen der axialen Lage des Rotors (3) derart angeordnet ist, dass das Spaltrohr (18) zwischem dem Rotor (3) und der Spule (35) verläuft.

8. Spaltrohrmotor nach einem der Ansprüche 1 bi.s 7, dadurch gekennzeichnet, dass die magnetischen Lagervorrichtungen (30a,30b) von einem dreiphasigen Drehstromsteller (36) gespeist sind.

9. Spaltrohrmotor nach einem der Ansprüche 1 bi.s 8, dadurch gekennzeichnet, dass die aktiv magnetisierbare Spule (35) zum Beeinflussen der axialen Lage des Rotor (3) einer Stirnseite des Rotors (3) gegenüberliegend angeordnet ist.

10. Spaltrohrpumpe umfassend ein Fördermittel für ein Fluid, insbesondere eine Kreiselpumpe (2), sowie einen Spaltrohrmotor nach einem der Ansprüche 1 bis 9.

## Claims

1. A gap tube motor comprising a rotor (3), a stator (4) and a gap tube (18) which is arranged between the rotor (3) and the stator (4), and at least two bearing apparatuses (30a, 30b, 30c) which are spaced in an axial direction (A) with respect to the rotor (3), characterised in that at least one of the bearing apparatuses (30a, 30b, 30c) is designed as a bearing and drive apparatus (32; 30a) and comprises both an electromotive apparatus (30a) and a magnetic bearing apparatus (30b) in order to both drive the rotor (3) and journal the rotor (3) in the radial direction without contact through this bearing and drive apparatus (32; 30a); and in that an actively magnetisable coil (35; 16) to influence the axial position of the rotor (3) is arranged such that the gap tube (18) extends between the rotor (3) and the coil (35; 16).

2. A gap tube motor in accordance with claim 1 characterised in that the bearing and drive apparatus (32) comprises an electric motor (30a) and a separately arranged magnetic bearing apparatus (30b).

3. A gap tube motor in accordance with claim 1 characterised in that the bearing and drive apparatus (30a) is designed as a bearing-less motor with a motor winding (12) having a number of pole pairs p arranged at the stator (4) as well as a control winding (12a) having a number of pole pairs p ± 1.

4. A gap tube motor in accordance with one of the claims 1 to 3 characterised in that the rotor (3) is designed as an inner rotor or as an outer rotor.

5. A gap tube motor in accordance with one of the claims 1 to 4 characterised in that all bearing apparatuses (30a, 30b) are designed as magnetic bearing apparatuses for the contact-free journalling of the rotor (3) in at least the radial direction.

6. A gap tube motor in accordance with one of the claims 1 to 5 characterised in that at least one sensor (15) is provided for the measurement of the position of the rotor (3); in that a gap tube (18) is arranged between the sensor (15) and the rotor (3); and in that the sensor is based on a magnetic measurement principle and in particular is designed as an eddy current sensor, an inductive sensor or a Hall sensor.

7. A gap tube motor in accordance with one of the claims 1 to 6 characterised in that an actively magnetisable coil (35) for influencing the axial position of the rotor (3) is arranged in such a manner that the gap tube (18) extends between the rotor (3) and the coil (35).

8. A gap tube motor in accordance with one of the claims 1 to 7 characterised in that the magnetic bearing apparatuses (30a, 30b) are fed by a three-phase rotary current controller (36).

9. A gap tube motor in accordance with one of the claims 1 to 8, characterised in that the actively magnetisable coil (35) to influence the axial position of the rotor (3) is arranged opposite an end face of the rotor (3).

10. A gap tube pump comprising a forwarding means for a fluid, in particular a centrifugal pump (2), as well as a gap tube motor in accordance with one of the claims 1 to 9.

## Revendications

1. Moteur à gaine comportant un rotor (3), un stator (4) ainsi qu'une gaine (18) disposée entre le rotor (3) et le stator (4) et au moins deux dispositifs de palier (30a, 30b, 30c) qui sont disposés selon un espacement dans la direction (A) axiale relativement au rotor (3), caractérisé en ce qu'au moins l'un des dispositifs de palier (30a 30b, 30c) est réalisé comme dispositif d'entraînement de palier (32, 30a) et comprend à la fois un dispositif d'entraînement électromoteur (30a) et aussi un dispositif de palier magnétique (30b) pour à la fois entraîner le rotor (3) par ce dispositif d'entraînement de palier (32 ; 30a) et le loger sans contact dans la direction radiale, et en ce qu'une bobine (35, 16) pouvant être aimantée activement, pour agir sur la position axiale du rotor (3), est disposée de façon que la gaine (18) s'étende entre le rotor (3) et la bobine (35, 16).

2. Moteur à gaine selon la revendication 1, caractérisé en ce que le dispositif d'entraînement de palier (32) comprend un moteur électrique (30a) ainsi qu'un dispositif de palier magnétique (30b) disposé séparément.

3. Moteur à gaine selon la revendication 1, caractérisé en ce que le dispositif d'entraînement de palier (30a) est réalisé comme moteur sans palier, avec un enroulement de moteur (12) disposé au stator (4) avec un nombre de paires de pôles p ainsi qu'un enroulement de commande (12a) avec un nombre de paires de pôles p ± 1.

4. Moteur à gaine selon l'une des revendications 1 à 3, caractérisé en ce que le rotor (3) est réalisé comme induit interne ou comme induit externe.

5. Moteur à gaine selon l'une des revendications 1 à 4, caractérisé en ce que tous les dispositifs de palier (30a, 30b) sont réalisés comme dispositifs de palier magnétiques, pour le logement sans contact du rotor (3) au moins dans la direction radiale.

6. Moteur à gaine selon l'une des revendications 1 à 5, caractérisé en ce qu'il est prévu au moins un capteur (15) pour détecter la position du rotor (3), en ce qu'il est disposé entre le capteur (15) et le rotor (3) une gaine (18) et en ce que le capteur est basé sur un principe de mesure magnétique et est réalisé notamment comme capteur à courant tourbillonnaire, comme capteur inductif ou comme capteur Hall.

7. Moteur à gaine selon l'une des revendications 1 à 6, caractérisé en ce que seulement une bobine (35) pouvant être aimantée activement, pour agir sur la position axiale du rotor (3) est disposée de façon que la gaine (18) s'étende entre le rotor (3) et la bobine (35).

8. Moteur à gaine selon l'une des revendications 1 à 7, caractérisé en ce que les dispositifs de palier magnétiques (30a, 30b) sont alimentés par un organe exécutif en courant triphasé (36).

9. Moteur à gaine selon l'une des revendications 1 à 8, caractérisé en ce que la bobine (35) pouvant être aimantée activement, pour agir sur la position axiale du rotor (3), est disposée en face d'un côté frontal du rotor (3).

10. Pompe à moteur à gaine comportant un moyen de convoyage d'un fluide, notamment une pompe centrifuge (2), ainsi qu'un moteur à gaine selon l'une des revendications 1 à 9.
